(19) **Europäisches Patentamt**

**European Patent Office**

**Office européen des brevets**

(11) Veröffentlichungsnummer: **0 344 150 B1**

(12) # EUROPÄISCHE PATENTSCHRIFT

(45) Veröffentlichungstag der Patentschrift:
03.07.91 Patentblatt 91/27

(51) Int. Cl.$^5$: **G01C 17/38**

(21) Anmeldenummer: 87906809.6

(22) Anmeldetag: 22.10.87

(86) Internationale Anmeldenummer:
PCT/DE87/00479

(87) Internationale Veröffentlichungsnummer:
WO 88/05154 14.07.88 Gazette 88/15

(54) **NAVIGATIONSVERFAHREN FÜR FAHRZEUGE MIT ELEKTRONISCHEM KOMPASS.**

(30) Priorität: 30.12.86 DE 3644683

(43) Veröffentlichungstag der Anmeldung:
06.12.89 Patentblatt 89/49

(45) Bekanntmachung des Hinweises auf die
Patenterteilung:
03.07.91 Patentblatt 91/27

(84) Benannte Vertragsstaaten:
DE FR GB IT SE

(56) Entgegenhaltungen:
WO-A-86/05584

(73) Patentinhaber: ROBERT BOSCH GMBH
Postfach 50
W-7000 Stuttgart 1 (DE)

(72) Erfinder: HELLDÖRFER, Reinhard
Rosenstrasse 9
W-8523 Igelsdorf (DE)
Erfinder: KANZLER, Ulrich
Heuweg 3
W-8504 Stein (DE)
Erfinder: OSTERKAMP, Eva
Steinbacher Strasse 12
W-8501 Burgthann 2 (DE)
Erfinder: RAUCH, Hans
Distelweg 11
W-8510 Fürth (DE)

## Beschreibung

### Stand der Technik

Die Erfindung geht aus von einem Verfahren zur Ermittlung der Nordrichtung bzw. Fahrrichtung eines Fahrzeugs mit einem elektronischen Kompaß zur Navigation nach der Gattung des Hauptanspruchs.

Ein solches Verfahren zur Korrektur der ermittelten elliptischen Ortskurve des am Magnetometer wirksamen Magnetfeldvektors ist aus der DE-OS3509548 bekannt. Dort wird vorgeschlagen, die vom Magnetometer gemessenen Werte des Magnetfeldes bezüglich einer Abweichung von der ermittelten Ortskurve zu überprüfen und jeweils dann eine Korrektur der Ortskurve vorzunehmen, wenn Abweichungen der Meßwerte von der Ortskurve mehrfach einen bestimmten Betrag überschreiten. Nachteilig hierbei ist, daß die durch Magnetfeldstörungen auftretenden Winkelfehler in der Richtungsanzeige durch dieses Verfahren nur sehr unzureichend und zu langsam korrigiert werden.

Bei einem aus der DE-PS 26 51 678 bekannten Kursmeßgerät wird zur Korrektur von Winkelfehlern beim Auftreten von Magnetfeldstörungen die Umschaltung des Magnetfeldsensors auf einen weiteren Sensor veranlaßt, wenn die vom Magnetfeldsensor gemessenen Werte um einen vorgegebenen Betrag von einem Sollwert abweichen. Hierbei ist nachteilig, daß ein zusätzlicher Sensor benötigt wird und daß dieser außerdem zumindest teilweise durch das Erdmagnetfeld und damit durch äußere Feldstörungen beeinflußt wird.

Mit der vorliegenden Lösung wird angestrebt, daß Navigationsfehler durch auf das Magnetometer einwirkende Störfelder bzw. Störfeldänderungen bei kurzzeitig oder längerfristig auftretenden Winkelstörungen unterdrückt bzw. begrenzt werden, um während der Störungen und danach eine möglichst genaue Richtungsanzeige zu ermöglichen.

### Vorteile der Erfindung

Das erfindungsgemäße Verfahren mit den kennzeichnenden Merkmalen des Patentanspruchs 1 hat den Vorteil, daß beim Auftreten von Störfeldern oder Störfeldänderungen zur Unterdrückung bzw. Begrenzung von Änderungen der Richtungsanzeige der Korrektureinfluß in Abhängigkeit von der Dauer der Meßwertabweichung vom Sollwert gewichtet wird.

Durch die in den abhängigen Patentansprüchen aufgeführten Maßnahmen sind vorteilhafte Weiterbildungen und Verbesserungen der im Anspruch 1 angegebenen Merkmale möglich. Dazu ist es besonders zweckmäßig, bei einer kurzzeitigen Abweichung der Meßwerte von der elliptischen Ortskurve über den vorgegebenen zulässigen Betrag hinaus eine Änderung der Richtungsanzeige vollständig zu unterdrücken. Bei einer länger andauernden Abweichung der Meßwerte vom Sollwert der elliptischen Ortskurve über einen vorgegebenen Betrag hinaus wird in vorteilhafter Weise die Änderungsgeschwindigkeit der Richtungsanzeige auf einen von der Fahrzeuggeschwindigkeit abhängigen Höchstwert begrenzt. Dabei werden zweckmäßigerweise die von der Fahrzeuggeschwindigkeit abhängigen Höchstwerte der Richtungsänderung durch die Grenze der zulässigen Querbeschleunigung des Fahrzeugs ermittelt und diese Werte in einem Datenspeicher der Auswerteschaltung abgelegt. Am Ende der unzulässigen Meßwertabweichung wird zweckmäßigerweise die dann über die Ortskurve ermittelte Richtung des Erdfeldes unmittelbar und ohne Korrektur wieder zur Ermittlung der Richtungsanzeige verwendet.

### Zeichnung

Ein Ausführungsbeispiel der Erfindung ist in der Zeichnung dargestellt und in der nachfolgenden Beschreibung näher erläutert. Es zeigen Figur 1 ein Navigationssystem für ein Kraftfahrzeug in Blockschaltbild, Figur 2 die elliptische Ortskurve des am Magnetometer des Navigationssystems wirksamen Magnetfeldes, Figur 3 die von der Fahrzeuggeschwindigkeit abhängigen Höchstwerte der Winkeländerungen und Figur 4 den zeitlichen Verlauf bei der Korrektur der Richtungsanzeige beim Auftreten von magnetischen Störungen während der Navigationsfahrt.

### Beschreibung des Ausführungsbeispieles

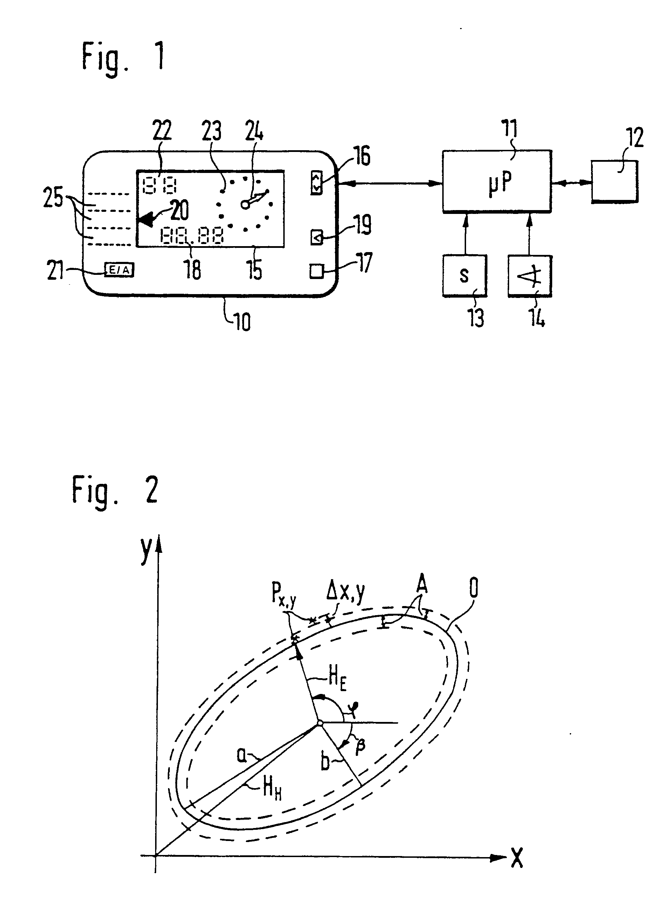

In Figur 1 ist ein Koppelnavigationssystem für Fahrzeuge dargestellt, mit dem der Fahrer durch Angabe von Zielrichtung und Luftlinienentfernung in einer fremden Umgebung das gewünschte Ziel finden kann (Zielfindungssystem). Es besteht aus einer Ein- und Ausgabeeinheit 10, einem Mikroprozessor 11 mit einem Datenspeicher 12 sowie aus einem Weggeber 13 und einem Fahrrichtungsgeber 14. Der Mikroprozessor 11 ist üblicherweise zusammen mit dem Datenspeicher 12 in der Ein- und Ausgabeeinheit 10 mitenthalten. Als Weggeber 13 können Impulsgeber eines Tachogenerators oder entsprechende Geber an den Fahrzeugrädern verwendet werden, die gegebenenfalls bereits im Fahrzeug vorhanden sind. Als Fahrtrichtungsgeber 14 ist ein Magnetometer bzw. ein Magnetfeldmesser zu verwenden. Der Mikroprozessor 11 verarbeitet die vom Weggeber 13 und vom Magnetometer 14 abgegebenen Signale und er führt die von den Bedientasten der Einheit 10 ausgelösten Steuer- und Eingabebefehle aus. Ferner steuert er die Ausgabe von Daten und Richtungspfeilen auf einer Flüssigkristallanzeige 15 der Einheit 10. Mit einer Wipptaste 16 können Zahlenwerte in Richtung 'größer' und 'kleiner' auf der LCD 15 verändert werden.

Mit der Betätigung einer Quittiertaste 17 wird jeweils der auf der LCD 15 angezeigte aktuelle Zahlenwert abgespeichert und im unteren Bereich der LCD 15 auf einer Anzeige 18 ausgegeben. Mit einer Funktionswahltaste 19 erfolgt die Umschaltung des Navigationssystems innerhalb eines angebotenen Menüs gemäß der Beschriftung 25 auf dem linken Randbereich der Einheit 10, wobei die jeweils auf der LCD 15 angezeigten Informationen durch einen Pfeil 20 auf der LCD 15 in Höhe der Beschriftung 25 kenntlich gemacht werden. Ein weiterer Tastschalter 21 dient zum Ein- und Ausschalten des Koppelnavigationssystems. Eine 7-Segment-Anzeige 22 im oberen LCD-Bereich dient zur Kennzeichnung von verschiedenen Zielvorgaben. Eine Rosette 23 der von verschiedenen Zielvorgaben. Eine Rosette 23 der LCD 15 mit 16 verschiedenen unsichtbaren Pfeilsegmenten dient zur Richtungsinformation, wobei der angesteuerte Richtungspfeil 24 entweder die Nordrichtung, die Fahrrichtung oder die Richtung des anzufahrenden Zieles darstellt.

Das im Fahrzeug fest angeordnete Magnetometer 14 hat zwei in der Fahrebene des Fahrzeugs ausgerichtete, um 90° gegeneinander versetzte Sonden, welche die von ihnen gemessenen Komponenten des am Magnetometer 14 wirksamen Magnetfeldes in Form von elektrischen Meßwerten ausgibt, die zyklisch in der Auswerteschaltung zur Ermittlung der Fahrrichtung oder der Nordrichtung erfaßt und ausgewertet werden. Wie in der DE-OS 35 09 548 näher beschrieben, bildet dabei die Verschiebung des Mittelpunktes der elliptischen Ortskurve des Magnetfeldvektors aus dem Koordinatenursprung einen richtungsunabhängigen, hartmagnetischen Störfelvektor $\overrightarrow{H_H}$ gemäß Figur 2. Weitere Parameter der in Figur 2 dargestellten elliptischen Ortskurve O sind die große und die kleine Halbachse a, b sowie die Drehung um den Winkel β zum Koordinatensystem x, y. Bei der Kallibrierung des Navigationssystems werden mit einer Kreisfahrt in bekannter Weise diese Ellipsenparameter ermittelt und im Datenspeicher 12 abgelegt. Bei den nachfolgenden Navigationsfahrten werden dann laufend die vom Magnetometer 14 gelieferten Meßwerte Px, y zur Ermittlung des Erdmagnetfelvektors $\overrightarrow{H_E}$ und des Winkels φ zwischen dem Erdmagnet feldvektor $\overrightarrow{H_E}$ und der Fahrrichtung (x-Achse) erfaßt.

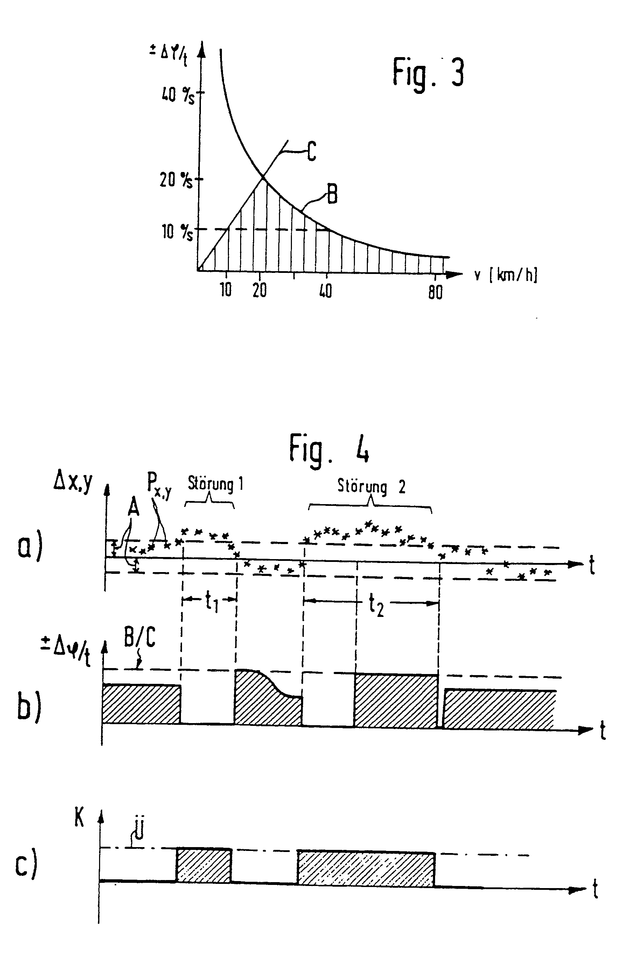

Aufgrund einer begrenzten Meßwertgenauigkeit wird nun gemäß Figur 2 in Verbindung mit Figur 4 erläutert, auf welche Weise eine Magnetfeldstörung erkannt und verarbeitet wird. Innerhalb einer bestimmten Bandbreite mit einem vorgegebenen Betrag A dürfen die Meßwerte Px, y von der elliptischen Ortskurve O nach außen oder nach innen abweichen, ohne Korrekturmaßnahmen auszulösen. Überschreitet jedoch die Abweichung Δx, y mehrerer aufeinanderfolgender Meßwerte Px, y von der elliptischen Ortskurve O den vorbestimmten Betrag A, so wird dies als magnetische Störung im Navigationssystem erkannt. Die Auswerteschaltung prüft anschließend aufgrund des laufend in einem Zwischenspeicher des Datenspeichers 12 abgelegten Richtungswinkels φ, ob gleichzeitig eine Winkeländerung Δφ/t des Erdmagnetfeldvektors $\overrightarrow{H_E}$ vorliegt. Ist dies nicht der Fall, so wird der Richtungswinkel unverändert beibehalten und die Meßwertabweichung Δx, Δy wird zur Korrektur der Ortskurve O über eines vorzugsweise gewichtete Mittelung der Meßwerte weiter verarbeitet.

Sobald jedoch gleichzeitig eine Winkeländerung Δφ/t an der Auswertschaltung festgestellt wird, wird die Änderungsgeschwindigkeit der vom Kompaß angezeigten Richtung auf einen vorgegebenen Wert begrenzt, wobei dieser Wert mit der Dauer der Meßwertabweichung gewichtet wird. Bei einer kurzzeitigen Abweichung der Meßwerte Px, y von der elliptischen Ortskurve O über den vorgegebenen Betrag A hinaus wird eine Änderung der Richtungsanzeige Δφ/t durch die Auswerteschaltung völlig unterdrückt. Bei einer länger andauernden Abweichung der Meßwerte Px, y an der elliptischen Ortskurve O über den vorgegebenen Betrag A hinaus wird die Änderungsgeschwindigkeit der Richtungsanzeige Δφ/t auf einen von der Fahrgeschwindigkeit des Fahrzeugs abhängigen Höchstwert begrenzt.

In Figur 3 sind durch die Kurve B die von der Fahrzeuggeschwindigkeit abhängigen Höchstwerte der zulässigen Richtungsänderung Δφ/t dargestellt, die sich aus der zulässigen Querbeschleunigung des Fahrzeugs ergeben. Diese Werte können zuvor bei trockener Straße und guter Bereifung des Fahrzeugs ermittelt und in Tabellenform im Datenspeicher 12 abgelegt werden. Wesentlich einfacher und zweckmäßiger ist es jedoch, die Tabelle durch einen Wert für die zulässige Querbeschleunigung zu ersetzen, der je nach Fahrzeugtyp zwischen 0,2 und 0,4 g liegt. Mit Hilfe der jeweils gemessenen Geschwindigkeit läßt sich dann laufend der Grenzwert auf der Kurve B errechnen [Δφ/$t_{max}$ = f (v)]. Eine weitere Höchstgrenze der Winkeländerung Δφ/t bildet der maximale Lenkradeinschlag des Fahrzeugs. Diese proportional zur Fahrzeuggeschwindigkeit verlaufende Grenze ist durch die Gerade C in Figur 3 dargestellt. Sie kann ebenfalls im Datenspeicher 12 abgelegt werden. Zweckmäßigerweise wird aber auch hier der Grenzwert der Kurve B laufend über die Fahrzeuggeschwindigkeit errechnet. Über eine Logik wird dann der größere Grenzwert auf Kurve A oder B unterdrückt und der kleinere Grenzwert mit der tatsächlichen Richtungsänderung Δφ/t verglichen.

Mit Hilfe der Figur 4 wird nun erläutert, auf welche Weise Änderungen der Richtungsanzeige beim Auftreten von Magnetfeldstörungen korrigiert werden. Aus Figur 4a ist erkennbar, daß im ersten Teil einer Navigationsfahrt die vom Magnetometer 14 gelieferten Meßwerte noch eine Abweichung Δx, y aufweisen, die innerhalb der zulässigen Abweichung A liegen. Figur 4b zeigt, daß die Winkeländerung $\Delta\varphi/t$ während dieser Zeit ebenfalls unterhalb der zulässigen Höchstgrenze liegt, die sich gemäß Figur 3 aus den Kennlinien B und C ergibt und beispielsweise bei einer Geschwindigkeit von v = 40 km/h etwa 10°/sec. beträgt. In Figur 4c wird mit der strichpunktierten Linie Ü dargestellt, daß eine laufende Überwachung der Meßwerte durch die Auswerteschaltung sowie eine Nacheichung der Ortskurve O stattfindet. Mit dem Auftreten einer kurzzeitigen Störung 1 über eine Zeit t1 von etwa 2 Sekunden wird nun jede Änderung der Richtungsanzeige $\Delta\varphi/t$ unterdrückt und die zuletzt angezeigte Richtung wird unverändert beibehalten, was aus Figur 4b erkennbar ist. Gemäß Figur 4c wird nun ein Korrektursignal K erzeugt und mit einer entsprechenden Programmschleife des Mikroprozessors 11 wird eine Mittelung der Meßwertabweichung $\Delta x$, y durchgeführt und mit dieser die Ortskurve O mit einer zeitabhängigen Gewichtung korrigiert, die geringer ist (< 1) als bei der Nacheichung einer zulässigen Abweichung. Am Ende der Störung 1 wird die Änderung der Richtungsanzeige $\Delta\varphi/t$ wieder freigegeben.

Da sich während der kurzfristig aufgetretenen Magnetfeldstörung die Fahrzeugrichtung laufend geändert haben kann, muß diese Richtungsänderung nunmehr auf der Anzeige nachgeführt werden. Dabei sollen jedoch die Höchstwerte gemäß Figur 3 nicht überschritten werden. Zu diesem Zweck ist vorgeschlagen, die Änderungsgeschwindigkeit $\Delta\varphi/t$ der Richtungsanzeige 24 mit dem geschwindigkeitsabhängigen Höchstwert B bzw. C solange fortzusetzen, bis die tatsächliche Richtung angezeigt bzw. die tatsächliche Winkeländerung der Fahrrichtung unterhalb des Höchstwertes B/C der Änderungsgeschwindigkeit $\Delta\varphi/t$ für die Richtungsanzeige gefallen ist. Diese Nachführung ist in Figur 4b erkennbar.

Beim Auftreten einer länger andauernden Störung 2 von mehr als zwei Sekunden wird zunächst erneut die Anzeige einer Winkeländerung $\Delta\varphi/t$ unterdrückt und die angezeigte Richtung wird beibehalten. Danach wird eine Winkeländerung $\Delta\varphi/t$ wieder zugelassen, sie wird jedoch auf die fahrgeschwindigkeitsabhängigen Höchstwerte B/C gemäß Figur 4b begrenzt. Außerdem wird während der Zeit t2 der Störung 2 ein Signal zur Mittelung der Meßwertabweichungen $\Delta x$, y generiert und dementsprechend die Ortskurve O dynamisch nachgeeicht. Zweckmäßigerweise wird dabei zunächst eine kleinere Gewichtung und bei längerer Störung eine zunehmende Gewichtung vorgesehen. Auf diese Weise lassen sich auch Magnetfeldänderungen im Fahrzeug durch Zuschalten bzw. Abschalten von elektrischen Verbrauchern gut ausregeln.

Mit dem Ende der Meßwertabweichungen während der Störung 2 wird nunmehr jedoch die unmittelbar vom Kompaß ermittelte Richtung des Erdmagnetfeldes ohne eine Korrektur zur Ermittlung der Richtungsanzeige verarbeitet und diese neu ermittelte Fahrrichtung oder Nordrichtung wird nun ohne Nachführungsbegrenzung vorzugsweise um mehrere Meßzyklen zeitverzögert zur Anzeige gebracht. Anschließend wird nun jede Änderung Richtungsanzeige in üblicher Weise von der Auswerteschaltung über die Richtung des Erdmagnetfeldes ermittelt und zur Anzeige gebracht. Dabei wird gleichzeitig in bestimmten Zeitabständen eine Überprüfung der Meßwerte bzw. deren Abweichung von der Ortskurve O durchgeführt. Dabei kann eine dynamische Korrektur der Ortskurve O auch in der Weise durchgeführt werden, daß bereits kleinere Meßwertabweichungen durch Mittelung fortlaufend zur Korrektur der Ortskurve O mit herangezogen werden. Um nach längeren Störungen durch eine fortlaufende Mittelung auftretende Restfehler zu vermeiden, wird die Mittelung dann wieder neu begonnen.

## Ansprüche

1. Verfahren zur Ermittlung der Nordrichtung bzw. der Fahrrichtung eines Fahrzeugs mit einem elektronischem Kompaß aus einem ortsfest in Fahrzeug angeordneten Magnetometer (14) und einer Auswerteschaltung (11), welche die vom Magnetometer (14) abgegebenen Meßwerte (Px, y) des dort wirksamen Magnetfeldvektors zyklisch erfaßt und zur Ermittlung und Überprüfung dessen elliptischer Orstkurve (O) und deren Parameter der Fahrrichtung sowie zur Korrektur der Orstkurve (O) bei einer Abweichung ($\Delta x$, y) mehrerer aufeinanderfolgender Meßwerte von der elliptischen Orstkurve (O) über einen vorgegebenen Betrag verarbeitet, dadurch gekennzeichnet, daß bei einer solchen Abweichung ($\Delta x$, y) der Meßwerte (Px, y) von der elliptischen Orstkurve (O) und gleichzeitiger Winkeländerung ($\Delta\varphi$) des Erdmagnetfeldvektors ($\overrightarrow{H_E}$) die Änderungsgeschwindigkeit ($\Delta\varphi/t$) der vom Kompaß angezeigten Richtung auf einen vorgegebenen Wert begrenzt wird und daß abhängig von der Dauer (t1, t2) der Meßwertabweichung die Begrenzung der Änderungsgeschwindigkeit ($\Delta\varphi/t$) der Richtungsanzeige gewichtet wird.

2. Verfahren nach Anspruch 1, dadurch gekennzeichnet, daß bei einer kurzzeitigen Abweichung der Meßwerte (Px, y) von der elliptischen Ortskurve (O) über den vorgegebenen Betrag ($\Delta x$, y) hinaus eine Änderung der Richtungsanzeige ($\Delta\varphi/t$) unterdrückt wird.

3. Verfahren nach Anspruch 1 oder 2, dadurch gekennzeichnet, daß bei länger andauernder Abweichung der Meßwerte (Px, y) von der elliptischen Ortskurve (O) über einen vorgegebenen Betrag ($\Delta x$, y) hinaus die Änderungsgeschwindigkeit ($\Delta\varphi/t$) der Richtungsanzeige auf einen von der Fahrzeuggeschwindigkeit abhängigen Höchstwert (B, C) begrenzt wird, wobei der Höchstwert (B, C) von der Auswerteschaltung über die Fahrzeuggeschwindigkeit zyklisch berechnet wird.

4. Verfahren nach Anspruch 3, dadurch gekennzeichnet, daß die von der Fahrzeuggeschwindigkeit abhängigen Höchstwerte (B) durch einen im Datenspeicher (12) abgelegten Grenzwert der zulässigen Querbeschleunigung des Fahrzeugs berechnet werden.

5. Verfahren nach Anspruch 4, dadurch gekennzeichnet, daß die von der Fahrzeuggeschwindigkeit abhängigen Höchstwerte (B, C) durch die maximal zulässige Fahrzeugquerbeschleunigung einerseits und durch den maximalen Lenkradeinschlag des Fahrzeugs andererseits berechnet werden und daß der größere der beiden Werte (A, B) unterdrückt und der kleinere mit der gemessenen Richtungsänderung (Δφ/t) verglichen wird.

6. Verfahren nach einem der Ansprüche 3 bis 5, dadurch gekennzeichnet, daß die Änderungsgeschwindigkeit (Δφ/t) der Richtungsanzeige mit den von der Fahrzeuggeschwindigkeit abhängigen Höchstwerten (B, C) solange fortgesetzt wird, bis sie unterhalb der Höchstwerte (B, C) gefallen ist.

7. Verfahren nach einem der vorherigen Ansprüche, dadurch gekennzeichnet, daß mit dem Ende der Meßwertabweichung die ermittelte Richtung des Erdmagnetfeldes ($\overrightarrow{H_E}$) nunmehr ohne Korrektur zur Ermittlung der Richtungsanzeige verwendet wird.

8. Verfaren nach Anspruch 7, dadurch gekennzeichnet, daß am Ende der Meßwertabweichung die nicht korrigierte Richtungsanzeige zeitverzögert übernommen wird.

9. Verfahren nach einem oder mehreren der vorhergehenden Ansprüche, dadurch gekennzeichnet, daß in bestimmten Zeitabständen eine Überprüfung der elliptischen Ortskurve (O) durchgeführt und durch Mittelung der Meßwertabweichungen (Δx, y) die Ortskurve (O) fortlaufend korrigiert wird.

10. Verfahren nach einem der Ansprüche 7 bis 9, dadurch gekennzeichnet, daß mit dem Ende der Meßwertabweichung die Mittelung mit den dann erfaßten neuen Meßwerten (Px, y) neu begonnen wird.

## Claims

1. Method of determining north or the travelling direction of a vehicle with an electronic compass comprising a magnetometer (14), arranged fixedly in the vehicle, and an evaluation circuit (11), which cyclically senses the measured values (Px, y), emitted by the magnetometer (14), of the magnetic field vector effective there and processes them for determining and checking the elliptical locus curve (O) of the latter and its parameters of the travelling direction as well as for correcting the locus curve (O) in the event of a deviation (Δx, y) of several successive measured values from the elliptical locus curve (O) beyond a predetermined amount, characterised in that, in the event of such a deviation (Δx, y) of the measured values (Px, y) from the elliptical locus curve (O) and a simultaneous angle change (Δφ) of the Earth's magnetic field vector ($\overrightarrow{H_E}$), the rate of change (Δφ/t) of the direction indicated by the compass is limited to a predetermined value, and in that the limitation of the rate of change (Δφ/t) of the direction indication is weighted as a function of the duration (t1, t2) of the measured value deviation.

2. Method according to claim 1, characterised in that, in the case of a brief deviation of the measured values (Px, y) from the elliptical locus curve (O) beyond the predetermined amount (Δx, y), a change of the direction indication (Δφ/t) is suppressed.

3. Method according to claim 1 or 2, characterised in that in the case of a more prolonged deviation of the measured values (Px, y) from the elliptical locus curve (O) beyond a predetermined amount (Δx, y), the rate of change (Δφ/t) of the direction indication is limited to a maximum value (B, C) dependent on the vehicle speed, the maximum value (B, C) being calculated cyclically by the evaluation circuit by means of the vehicle speed.

4. Method according to claim 3, characterised in that the maximum values (B) dependent on the vehicle speed are calculated by a limit value of the permissible lateral deviation of the vehicle, stored in the data memory (12).

5. Method according to claim 4, characterised in that the maximum values (B, C) dependent on the vehicle speed are calculated by the maximum permissible vehicle lateral acceleration, on the one hand, and by the maximum steering wheel lock of the vehicle, on the other hand, and in that the greater of the two values (A, B) is suppressed and the lesser value is compared with the measured direction change (Δφ/t).

6. Method according to one of claims 3 to 5, characterised in that the rate of change (Δφ/t) of the direction indication is continued with the maximum values (B, C) dependent on the vehicle speed until it has dropped below the maximum values (B, C).

7. Method according to one of the preceding claims, characterised in that, with the end of the measured value deviation, the determined direction of the Earth's magnetic field ($\overrightarrow{H_E}$) is then used without correction for determining the direction indication.

8. Method according to claim 7, characterised in that, at the end of the measured value deviation, the non-corrected direction indication is taken over with a tire delay.

9. Method according to one or more of the preceding claims, characterised in that, at certain time intervals, a checking of the elliptical locus curve (O) is carried out and the locus curve (O) is continuously corrected by averaging of the measured value deviations (Δx,y).

10. Method according to one of claims 7 to 9, characterised in that, with the end of the measured value deviation, averaging is recommenced with the then sensed new measured values (Px, y).

## Revendications

1. Procédé pour déterminer la direction du nord ou la direction de déplacement (cap) d'un véhicule à l'aide d'une boussole ou compas électronique à partir d'un magnétomètre (14) fixé par rapport au véhicule et d'un circuit d'exploitation (1) qui reçoit les grandeurs de mesure (Px, y) fournies par le magnétomètre (14) et correspondant au vecteur de champ magnétique local et pour déterminer et contrôler sa courbe locale elliptique (O) et les paramètres de direction de déplacement ainsi que pour corriger la courbe locale (O) lorsque plusieurs grandeurs de mesure successives dévient ($\Delta$x, y) de la courbe locale elliptique (O) d'une valeur supérieure à une valeur prédéterminée, procédé caractérisé en ce que pour une telle déviation ($\Delta$x, y) des grandeurs de mesure (Px, y) par rapport à la courbe locale elliptique (O) et pour une variation d'angle simultanée ($\Delta\varphi$) du vecteur de champ magnétique terrestre ($\overrightarrow{H_E}$), on limite la vitesse de variation ($\Delta\varphi$/t) de la direction affichée par le compas à une valeur prédéterminée et en ce qu'en fonction de la durée (t1, t2) de la déviation de la valeur de mesure, on pondère la limitation de la variation de vitesse ($\Delta\varphi$/t) de l'affichage de direction.

2. Procédé selon la revendication 1, caractérisé en ce qu'en cas de variation de courte durée des grandeurs de mesure (Px, y) par rapport à la courbe locale elliptique (O) supérieures à une valeur prédéterminée ($\Delta$x, y), on interdit toute variation de l'affichage de direction ($\Delta\varphi$/t).

3. Procédé selon la revendication 1 ou 2, caractérisé en ce que pour une déviation prolongée des valeurs de mesure (Px, y) par rapport à la courbe locale elliptique (O) au-delà d'une valeur prédéterminée ($\Delta$x, y), on limite la vitesse de variation ($\Delta\varphi$t) de l'affichage de direction à une valeur maximale (B, C) dépendant de la vitesse du véhicule, la valeur maximale (B, C) étant calculée de manière cyclique par le circuit d'exploitation en fonction de la vitesse du véhicule.

4. Procédé selon la revendication 3, caractérisé en ce que les valeurs maximales (B) dépendant de la vitesse du véhicule sont calculées à partir d'une valeur limite de l'accélération transversale autorisée du véhicule, valeur inscrite dans une mémoire de données (12).

5. Procédé selon la revendication 4, caractérisé en ce que les valeurs maximales (B, C) dépendant de la vitesse du véhicule sont calculées d'une part par l'accélération transversale maximale autorisée du véhicule et d'autre part par le braquage maximum du véhicule et en ce que la plus grande des deux valeurs (A, B) est supprimée et la plus petite est comparée à la variation de direction, mesurée ($\Delta\varphi$/t).

6. Procédé selon l'une des revendications 3 à 5, caractérisé en ce que la vitesse de variation ($\Delta\varphi$/t) de l'affichage de direction est poursuivie aux valeurs maximales (B, C) dépendant de la vitesse du véhicule jusqu'à ce que cette variation soit tombée en-dessous des valeurs maximales (B, C).

7. Procédé selon l'une des revendications précédentes, caractérisé en ce qu'à la fin de la déviation de valeur de mesure, la direction déterminée du champ magnétique terrestre ($\overrightarrow{H_E}$) est utilisée sans correction pour déterminer l'affichage de direction.

8. Procédé selon la revendication 7, caractérisé en ce qu'à la fin de la déviation de la valeur de mesure, on reprend avec retard, l'affichage de direction, non corrigé.

9. Procédé selon l'une ou plusieurs des revendications précédentes, caractérisé en ce que dans des intervalles de temps déterminés, on contrôle la courbe locale elliptique (O) et en faisant la moyenne des déviations de valeur de mesure ($\Delta$x, y), on corrige en continu la courbe locale (O).

10. procédé selon l'une des revendications 7 à 9, caractérisé en ce qu'à la fin de la déviation de valeur de mesure, on recommence de nouveau la formation de la moyenne en utilisant les nouvelles grandeurs de mesure (Px, y).

Fig. 1

Fig. 2

Fig. 3

Fig. 4